(19) Europäisches Patentamt
European Patent Office
Office européen des brevets

(11) Publication number: **0 102 711 A2**

(12) # EUROPEAN PATENT APPLICATION

(21) Application number: 83304020.7

(22) Date of filing: 11.07.83

(51) Int. Cl.³: B 29 D 3/02

(30) Priority: 28.07.82 GB 8221754

(43) Date of publication of application: 14.03.84 Bulletin 84/11

(84) Designated Contracting States: AT BE CH DE FR GB IT LI NL SE

(71) Applicant: **IMPERIAL CHEMICAL INDUSTRIES PLC**
**Imperial Chemical House Millbank**
**London SW1P 3JF(GB)**

(72) Inventor: **Brewster, Ian**
**Camrose House 15 Digswell Park Road**
**Welwyn Garden City Herts(GB)**

(72) Inventor: **Cogswell, Frederic Neil**
**67 Daniells**
**Welwyn Garden City Herts(GB)**

(74) Representative: **Downer, John Michael et al,**
**Imperial Chemical Industries PLC Legal Department: Patents PO Box 6**
**Welwyn Garden City Herts, AL7 1HD(GB)**

(54) **Process for producing fibre-reinforced polymer compositions.**

(57) A process of producing a fibre-reinforced composition comprising feeding a plurality of contiguous aligned filaments in the form of a band to a spreader surface so as to form a nip between the band and the spreader surface, supplying a feed of thermoplastics polymer at the nip and impregnating the band of filaments with molten polymer characterised in that at least some of the heat input required to melt the polymer is supplied directly to the filaments. The process enables good impregnation to be achieved using a significantly lower energy input.

EP 0 102 711 A2

PROCESS FOR PRODUCING FIBRE-REINFORCED POLYMER COMPOSITIONS

This invention relates to a process for producing fibre-reinforced compositions containing thermoplastics resins.

European patent publication No. 56703 describes a process of producing a fibre-reinforced composition comprising tensioning and aligning a plurality of continuous filaments to provide a band of contiguous filaments, passing the band over a heated spreader surface so as to form a nip between the band and the spreader surface, maintaining a feed of a thermoplastics polymer at the nip, the temperature of the spreader surface being sufficiently high to give a polymer melt of viscosity capable of wetting the continuous filaments as they are drawn over the spreader surface. It is an essential feature of this process that the spreader surface should be sufficiently hot to ensure that the polymer is sufficiently fluid to wet the continuous filaments and to ensure that the polymer does not freeze before impregnation is effected. Specific examples describe a process in which the heat input to the system is provided by a heat input directly to the spreader surfaces which melts the polymer when the polymer contacts the hot spreader surfaces. It is also envisaged that the polymer may be supplied in the form of a melt. In these cases the filaments are brought to the temperature of the melt largely through heat conduction from the melt.

It has now been found that excellent results are obtained if at least some of the heat required in the impregnation process is supplied directly to the continuous filaments rather than the filaments being heated solely by contact with a hot melt.

Accordingly there is provided a process of producing a fibre-reinforced composition comprising feeding a

plurality of contiguous aligned filaments in the form of a band to a spreader surface so as to form a nip between the band and the spreader surface, supplying a feed of thermoplastic polymer at the nip and impregnating the band of filaments with molten polymer characterised in that at least some of the heat input supplied to the molten polymer is supplied directly to the filaments. The invention is particularly applicable to filaments which can be heated by the passage of an electrical current, such as carbon fibre. Other methods of direct heating of the filaments include microwave, induction heating or direct heating of the filaments by infra-red heating. Preferably the method of direct heating should be one that can be applied continuously to the filaments at least over that part of the path of the filaments over which impregnation takes place.

The heat supplied to the continuous filaments may be sufficient in itself to melt a polymer powder to a condition where its melt viscosity is low enough for good wetting of the filaments, but some of the heat required to produce a fluid melt may be provided by means other than the direct heating of the filaments, for example by supplying premelted polymer to the nip or by supplying heat to the system other than that received from contact with heated filaments or molten polymer, for example by heating a spreader surface at which a feed of polymer is supplied.

It is a particular advantage of the invention that the energy consumption of the process is greatly reduced and with this objective in mind the amount of heat input other than that supplied to heat the filaments directly should be minimised. A further benefit which stems from the more efficient use of energy in the system is that the risk of thermal degradation can be reduced.

The polymer fed to the nip may be supplied in a number of ways. A polymer powder may be fed to the nip from a hopper or other conveying device. Alternatively the polymer may be in other forms such as a melt or as a preformed film. Yet again, the polymer may have been caused to adhere to the band of contiguous fibres in a previous stage of the process so that the polymer is conveyed to the nip already adhering to the band. More simply, the band may be used to convey metered quantities of powder to the nip. In all the cases the purpose of the nip formed between the band and the spreader surface is to provide a region in which positive pressure can be applied between the band and the spreader surface to at least partially molten polymer to impregnate the band of contiguous filaments by the mechanical action of the polymer melt being squeezed or pumped through the band.

If insufficient impregnation is effected using a single pass over a spreader surface the process may be repeated using successive spreader surfaces until sufficient impregnation is achieved. In each successive stage the conditions should be such that sufficient heat is present in or supplied to the polymer impregnated band to maintain the polymer in melt form and to cause the melt to flow through the continuous filaments of the band by the positive pressure of the band against a spreader surface.

The number of impregnation stages required is readily determined experimentally by examination of the end product obtained after successive increases in the number of impregnation stages used. The extent of impregnation is determined by measuring the flexural modulus obtained and relating it to the theoretically attainable flexural modulus.

The theoretically attainable flexural modulus is calculated using the simple rule of mixtures;

$$E_L = V_f E_f + V_m E_m$$

where $E_L$ is the longitudinal modulus of the composition,

$V_f$ is the volume fraction of fibre,

$E_f$ is the flexural modulus of the fibre,

$V_m$ is the volume fraction of the matrix polymer,

$E_m$ is the flexural modulus of the matrix polymer.

The number of impregnation stages should be sufficient to give a flexural modulus as determined by ASTM D790-80 of at least 70% and preferably at least 90% of the theoretically obtainable flexural modulus.

The amount of-polymer in the reinforced structure is controlled to a large extent by the tension in the band and the length of path over which the band contacts the heated spreader surface. Thus where the band is under high tension and contacts the spreader surface over a substantial area, so that the band is strongly urged against the spreader surface, the polymer content of the reinforced structure will be lower than under low tension/short contact path conditions.

The spreader surfaces and any subsequent surfaces used to improve impregnation or to improve surface finish are preferably in the form of cylindrical bars or rollers. These may be stationary or capable of either free or driven rotation. For example, the first impregnation surface may be a freely rotating roller which will be caused to rotate by the band at the speed of the band so that attrition of the fibre prior to impregnation or sizing by the melt is reduced to a minimum. It has been observed that if the first roll is rotated (either freely or driven) in the direction of the movement of the fibre at up to the speed of the fibre any accumulation of loose fibre on the band is carried through the system. This self-cleaning action is particularly useful in preventing

an accumulation of fibre at the first roll which could cause splitting of the band. After the band has been impregnated with some of the melt mixture, preferably after being provided with further molten mixture on the other side of the band by means of a second freely rotatable surface, the fibre is much less susceptible to attrition and may be subjected to further treatment to improve wetting of the fibres.

The polymer used in the process should have a sufficiently low viscosity at a temperature below its decomposition temperature to permit good wetting of the continuous filaments. Little difficulty is experienced using the process with polymers having a melt viscosity of up to 100 $Ns/m^2$. At higher melt viscosities, for example up to 200 $Ns/m^2$, more difficulty is experienced although even this difficulty can be overcome by using a sufficient number of spreader surfaces over which the melt impregnated continuous filaments are drawn to mechanically work the melt within impregnated band to maximise wetting. Polymers of even higher melt viscosity can be used in conjunction with a melt plasticiser as disclosed in copending British Patent Application Nos. 8221752 and 8221753.

British Patent Application No. 8221752 describes a process of producing a fibre-reinforced composition comprising drawing a plurality of continuous filaments through a melt comprising a mixture of a thermoplastic polymer and a plasticiser for the polymer in the weight ratio between 1:4 and 99:1 of polymer to plasticiser, preferably in the weight ratio 1:1 to 19:1, the plasticiser being thermally stable at least up to the temperature of the melt and having volatility characteristics such that the plasticiser is not substantially volatilised from the composition below the melt temperature of the composition.

British Patent Application No. 8221753 describes a process of producing a fibre-reinforced composition comprising drawing a plurality of continuous filaments through a melt comprising a mixture of a thermoplastic polymer and a plasticiser for the polymer in the weight ratio between 1:4 and 99:1 of polymer to plasticiser, preferably in the weight ratio 1:1 to 19:1, the plasticiser being thermally stable at least up to the temperature of the melt and having volatility characteristics such that the plasticiser can be volatilised from the composition below the decomposition temperature of the thermoplastic polymer but has a sufficiently low volatility at the temperature of the melt to plasticise the polymer in the melt and give a melt of reduced viscosity compared with the melt viscosity of the polymer alone. It is not, in fact, essential to remove all volatilisable plasticiser from the composition. Compositions containing some residual plasticiser, for example up to 5% by weight of the composition, can be formed into shaped articles having acceptable mechanical properties.

It is an essential feature of both of these latter processes that the polymer in the mixture is present in melt form. The temperature of the melt must be above the glass transition temperature (Tg) of the polymer component. In the case of a crystalline polymer its melting point may be well above its Tg so that the temperature of the melt must be well above the Tg of the polymer employed. It is not necessary in every case that the temperature of the melt is above the melting temperature of the polymer itself because in some cases the plasticiser will lower the melting point of the polymer.

The thermoplastic polymer used may be any of the melt processable thermoplastic polymers having suitable

viscosity characteristics but particularly useful products are obtained when thermoplastic aromatic polymers are used. Such polymers include polysulphones, polyethersulphones, polyetherketones, polyetheretherketones, polyarylene oxides, polyarylene sulphides, aromatic polyamides, aromatic polyesters, aromatic polycarbonates and polyetherimides. In general, the thermoplastic aromatic polymers used in the compositions of this invention comprise repeat units of the general formula:

-Ar-X-

where Ar is selected from mono- or polycyclic aromatic radicals and X is selected from at least one of -O-, -S-, $-SO_2-$, -O.CO-, -.CO.O-, -CO-, NHCO- and 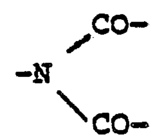 . Ar and/or X may vary from unit to unit in the polymer chain.

By the term "continuous fibres" or "plurality of continuous filaments" is meant any fibrous product in which the fibres are sufficiently long to give a roving or tow of sufficient strength, under the processing conditions used, to be hauled through the molten polymer without the frequency of breakage which would render the process unworkable. Suitable materials are glass fibre, carbon fibre, jute and high modulus synthetic polymer fibres. In the latter case it is important that the polymer fibres conform to the proviso of having sufficient strength to be capable of being hauled through the polymer melt without breakage disrupting the process. In order to have sufficient strength to be hauled through the impregnation system without breakage the majority of the continuous fibres of the fibrous product should lie in one direction so that the fibrous product can be drawn through molten polymer with the majority of the continuous fibres

aligned. Fibrous products such as mats made up of randomly disposed continuous fibrous are not suitable for use in the invention unless they form part of a fibre structure in which at least 50% by volume of the fibres are aligned in the direction of draw.

The continuous fibres may be in any form having sufficient integrity to be pulled through the molten polymer but conveniently consist of bundles of individual fibres or filaments, hereinafter termed "rovings" in which substantially all the fibres are aligned along the length of the bundles. Any number of such rovings may be employed. In the case of commercially available glass rovings each roving may consist of up to 8000 or more continuous glass filaments. Carbon fibre tapes containing up to 6000 or more carbon fibres may be used. Cloths woven from rovings may also be suitable for use in the present invention. The continuous fibres may be provided with any of the conventional surface sizes, particularly those designed to maximise bonding between the fibre and the matrix polymer.

The impregnated band produced by the process of the invention may be subjected to further treatments depending on the intended shape and purpose of the end product. The separated filaments in the impregnated band may, for example, be drawn together through a die to provide a profile of considerably greater thickness than the impregnated band. A limited amount of shaping may be effected in such a die to provide a shaped profile.

The impregnated products of the processes hereinbefore described may be wound on rolls for subsequent use in fabrication processes requiring a continuous product or may be chopped into lengths for subsequent fabrication. The continuous lengths may be used to fabricate articles, for example, by winding the heat-softened product around a former, or, for example, by

weaving a mat from tapes or strips of the product. The impregnated product may be chopped into pellets or granules in which the aligned fibres have lengths from 3 mm up to 100 mm. These may be used in conventional moulding or extrusion processes.

When glass fibre is used the fibre content of the product of the invention should be at least 50% by weight of the product to maximise the physical properties of the product. The upper limit of fibre content is determined by the amount of polymer required to wet out the individual fibres of the roving. In general it is difficult to achieve good wetting with less than 20% by weight of polymer although excellent results are obtainable using the process of the invention to incorporate 30% by weight of polymer in the fibre-reinforced composition.

When the impregnated products of the invention are reinforced with fibres which can be heated by the passage of electrical current through the fibres substantial fabrication advantages arise. The resistance heating attainable allows composites of even high melting polymers to be heat softened to a fabricable form. Thus it is possible to heat soften extremely large carbon reinforced structures using electrical resistance heating. This permits large parts such as aeroplane wings to be heated in situ in a thermoforming apparatus thus avoiding the difficulty of oven heating large parts and the subsequent problem of transporting the heat softened part to the thermoforming station. The ability to heat soften in this manner also offers substantial advantages in joining or jointing separate pieces of like materials.

The invention is further illustrated by reference to the following examples.

EXAMPLE 1

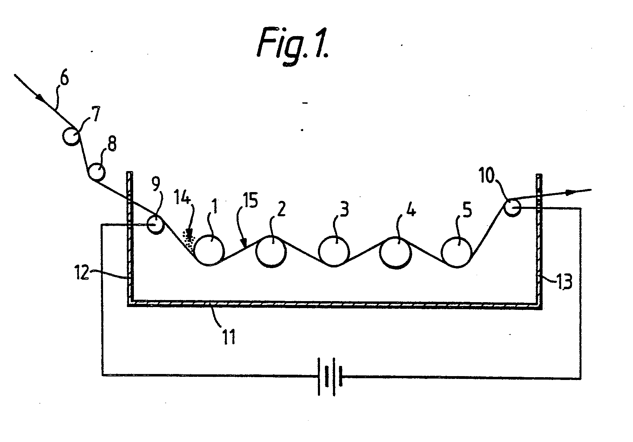

A continuous carbon fibre roving consisting of 12000 individual filaments (obtained from Hercules Inc and designated AS4 12K) was impregnated with a polyetheretherketone (PEEK) having a melt viscosity of 25 $Ns/m^2$ using the impregnation apparatus described below. The impregnation apparatus shown in Figure 1 consists of a series of 5 spreader bars 1, 2, 3, 4 and 5 in the form of fixed cylindrical rods of 10 mm diameter arranged in side-by-side relationship with their axes in a horizontal plane. The spreader bars were provided with internal electrical heating elements (not shown). A continuous carbon fibre 6 is drawn over a series of stationary guide bars 7, 8 and 9 to tension the roving and to enable the individual filaments to be aligned in a contiguous relationship to form a band up to 18 mm wide. The last of the series of stationary guide bars 9 was composed of an electrically conducting metal to provide good electrical contact between the carbon fibre and guide bar 9. The band of continuous carbon fibres is successively drawn under and over the spreader bars, forming a nip between the band and each spreader bar, to a further electrically conductive bar 10. A current was passed between bars 9 and 10 using a 24 volt DC supply (not shown). The assembly of bars 9 and 10 and the spreader bars were contained in a box 11 having electrically insulated ends 12 and 13.

In operation spreader bars were heated to temperatures varying between 245°C to 275°C. (These temperatures are below the melting point of the PEEK polymer (343°C).) A current of 5 amps was passed along the carbon fibres between stationary guide bars 9 and 10 whilst the fibres were drawn through the system at a speed of 5 cm/min. The polyetheretherketone in powder form was metered to the nip 14 between the band and the first in

the series of spreader bars. The powder was melted by the combination of heat inputs from the spreader bars and the electrical heat input into the carbon fibres. A polymer powder which fell on to the upper surface of the band 15 rather than into the nip 14 was rapidly melted and was transported on the band until meeting the nip formed by the band and spreader bar 3 where it became incorporated in the impregnated band. The product leaving the conductive bar 10 showed excellent impregnation.

The procedure was repeated using carbon fibre pull through speeds of up to 30 cm/min. Good impregnation was achieved at all these speeds.

The amount of heat required by this impregnation process was only about 1/4 of that used in a comparable process where the heat was provided entirely from heated spreader bars.

The product obtained by passing the carbon fibre through the system at 25 cm/minute had a carbon fibre content of about 50% by weight. The interlaminar shear strength of the product was measured on test pieces formed by pressing 16 plies of this material cut into pieces of length 76 mm and with 5 mm to give a final pressed thickness of 2 mm. The pressing of the 16 plies was performed in a matched die compression moulding tool heated to 400°C. The pressure used was $5 \times 10^6$ $N/m^2$ over a period of 10 minutes with pressure being maintained whilst the temperature reduced to 100°C over a further 17 minutes. The mould was allowed to cool to ambient temperature without applied pressure. The interlaminar shear strength of the mouldings was assessed according to the procedure of ASTM D2344-72 using a span to sample thickness ratio of 5:1. Values averaging 90 $MN/m^2$ were obtained. Some samples prepared in the same manner were subjected to boiling water for 24 hours and were found to have an interlaminar shear strength averaging 86.0. All

the samples failed by delamination rather than a simple break.

CLAIMS:

1. A process of producing a fibre-reinforced composition comprising feeding a plurality of contiguous aligned filaments in the form of a band to a spreader surface so as to form a nip between the band and the spreader surface, supplying a feed of thermoplastic polymer at the nip and impregnating the band of filaments with molten polymer characterised in that at least some of the heat input supplied to the molten polymer is supplied directly to the filaments.

2. A process according to claim 1 wherein the heat supplied directly to the filaments is in the form of electrical, microwave, induction or infra-red heating.

3. A process according to either of claims 1 or 2 in which the direct heating supplied to the filaments is applied at least over that part of the path of the filaments over which impregnation takes place.

4. A process according to any one of the preceding claims wherein at least some of the heat supplied to produce molten polymer is supplied by means other than direct heating of the filaments.

5. A process according to claim 4 wherein premelted polymer is supplied to the nip.

6. A process according to claim 4 wherein at least some of the heat required to melt the polymer is supplied by heating a spreader surface at which a feed of polymer is supplied.

7. A process according to any one of the preceding claims in which the filaments are carbon filaments.

8. A process according to any one of the preceding claims in which the thermoplastic polymer is an aromatic thermoplastic polymer.

Fig. 1.